# EUROPÄISCHE PATENTSCHRIFT

(11) **EP 2 450 306 B1**
(45) Veröffentlichungstag und Bekanntmachung des Hinweises auf die Patenterteilung: **27.11.2013**
(21) Anmeldenummer: 12000072.4
(22) Anmeldetag: 14.12.2009
(51) Int. Cl.: B67C 7/00, B65B 43/52, B65G 35/06, B65G 35/08

(54) **Vorrichtung zum Befüllen von Behältern insbesondere mit Nahrungsmitteln**
Device for filling containers, particularly with food
Dispositif de remplissage de récipients, en particulier avec des aliments

(43) Veröffentlichungstag der Anmeldung: 09.05.2012
(62) Teilanmeldung aus: 09807436.2
(73) Patentinhaber: Hamba Filltec GmbH & Co. KG, 66130 Saarbrücken (DE)
(72) Erfinder: Junk, Martin, 66636 Tholey (DE)
(74) Vertreter: Ostriga Sonnet Wirths & Vorwerk

(56) Entgegenhaltungen:
- EP-A1- 0 286 514
- EP-A1- 1 134 182
- EP-A1- 1 495 997
- WO-A1-98/30491
- WO-A1-03/051760
- WO-A2-01/74691
- DE-A1-102006 015 842
- DE-C- 151 457
- US-A1- 2003 159 753
- US-A1- 2005 097 863

## Beschreibung

Die Erfindung betrifft eine Vorrichtung zum Befüllen von Behältern, insbesondere von Flaschen und Bechern, mit Nahrungs- und Genussmittel, insbesondere mit dünnflüssigen bis pastösen Molkerei- und Fettprodukten, Säften, Wässern od. dgl.
- mit einem Obertrum, einem Untertrum und mit Ober- und Untertrum verbindenden Seitentrümern,
- mit einer Vielzahl von Tragelementen, die endlos durch die Vorrichtung vorbei an Arbeitsstationen entlang von Ober- Seiten- und Untertrum geführt sind,
- wobei die Tragelemente quer zur Förderrichtung in Reihen angeordnete Aufnahmen für Behälter aufweisen die in Förderrichtung in Bahnen angeordnet sind,
- wobei die Tragelemente entlang einer Reihe von Aufnahmen in etwa hälftig geteilt sind, paarweise einander zugeordnete Teilaussparungen benachbarter Tragelementhälften gemeinsam eine Behälteraufnahme bilden und
- die Tragelementhälften derart in der Vorrichtung gelagert sind, dass sie eine die Behälteraufnahmen weitende Öffnungsbewegung ausführen können und
- mit einer Behälterzuführeinrichtung.

Eine gattungsgemäße Vorrichtung ist beispielsweise aus EP 1 134 182 bekannt. Es handelt sich um einen Abfüllautomaten, welcher Nahrungsmittel, wie Molkereiprodukte, in Becher oder Flaschen abfüllt. Hierbei laufen die Tragelemente, auch Zellenbretter genannt, an einer Kette geführt, endlos durch die Vorrichtung. Üblicherweise sind die Arbeitsstationen, welche die Behälter sterilisieren, trocknen, befüllen und verschließen entlang des sogenannten Obertrums angeordnet. Über ein erstes Seitentrum laufen die Tragelemente dann in das unterhalb des Obertrums gelegene Untertrum und werden über ein zweites Seitentrum dem Obertrum wieder zugeführt.

Bei der weit überwiegenden Anzahl der am Markt befindlichen Vorrichtungen richtet sich die Anzahl befüllter Behälter nach der Bearbeitungszeit der langsamsten Arbeitsstation der Kette. Der Kettenvorzug erfolgt getaktet, so dass in einer einfachen Variante immer diejenigen Behälter behandelt werden, welche gemeinsam auf einem Tragelement gehalten sind. Es existieren jedoch auch sogenannte Doppelschrittvorrichtungen, bei welchen die Behälter zweier Tragelemente gleichzeitig eine Behandlung an den Arbeitsstationen erfahren.

Die Technik des Kettenantriebs ist wohl erprobt und wird seit langer Zeit zuverlässig eingesetzt, obwohl sie nicht unerhebliche Nachteile aufweist. Zunächst besteht das grundsätzliche Problem, dass sich die Kette im Betrieb längt. In Folge dessen nimmt der in Förderrichtung gemessene Abstand zwischen den Tragelementen und somit auch zwischen den von ihnen gehaltenen Behältern im Zeitverlauf zu. Dies ist insofern problematisch, als dass Eindosieren von Sterilisationsmitteln das Einblasen von Trocknungsluft, das Befüllen der Behälter wie auch das Verschließen an den einzelnen Arbeitsstationen auf eine vergleichsweise exakte Positionierung der Behälter angewiesen ist. In Folge dessen sind bei kettenbetriebenen Vorrichtungen Zentriereinrichtungen notwendig.

Die Tragelemente werden auf Gleitschienen durch die Vorrichtung gezogen, zudem ist ab gewissen Tragelementgrößen eine in Förderrichtung etwa mittige Unterstützung notwendig. Die zu überwindenden Massenträgheitsmomente in Verbindung mit den derzeit üblichen Bewegungsgeschwindigkeiten der Tragelemente durch die Vorrichtung erfordern starke und somit schwere Ketten. Entsprechend sind auch die antreibenden Zahnräder und Motoren dimensioniert. Eine solche Vorrichtung besteht in Folge dessen aus ausgesprochen massiven und schweren Bauteilen.

Seit geraumer Zeit werden in der Fachwelt theoretische Gedanken angestellt, wie ein kettenloser Antrieb für eine gattungsgemäße Vorrichtung konstruierbar sei. Bekannt geworden ist hierzu in jüngerer Zeit beispielsweise das deutsche Gebrauchsmuster DE 20010 791 U1. Hier ist eine Triebstockverzahnung gezeigt, welche direkt in die Tragelemente eingreift und diese durch die Vorrichtung schiebt. Die Seitentrümer sind als bogenförmig das Obertrum und Untertrum verbindende Schienensysteme ausgeführt. Die Tragelemente sind für die Bewegung durch die Seitentrümer mit Distanzstücken versehen.

Aus EP 1 495 997 A1 sind weitere Antriebskonzepte bekannt, mit welcher die Tragelemente - Zellenbrett an Zellenbrett - durch eine gattungsgemäße Vorrichtung geschoben werden. Unter anderem wird hier ein Schneckenförderer vorgeschlagen.

Das Schieben der Zellenbretter durch die Vorrichtung hat den wesentlichen Vorteil, dass auf die ihrer Längung wegen problematische Kette verzichtet werden kann. Grundsätzlich bleibt jedoch das Problem, dass große Reibungskräfte zu überwinden sind und in der Regel weiterhin eine in Förderrichtung gesehene zentrale Unterstützung für die Zellenbretter notwendig ist. Zudem ist auch beim Schieben der Zellenbretter durch die Vorrichtung hindurch nicht gewährleistet, dass die in Förderrichtung gesehenen Abstände der Tragelemente bzw. Behälter zueinander konstant ist. Grundsätzlich die Gefahr, dass sich zwischen den Tragelementen ansammelnde Schmutzpartikel, beispielsweise Produktrückstände, zu erheblichen Summenfehlern aufaddieren.

Auch wenn EP 1 495 997 A1 zur Reibungsminimierung vorschlägt, die Zellenbretter auf Rollen durch die Vorrichtung zu schieben, bleibt - neben den angesprochenen Summenfehlern - das Problem, dass die dort vorgeschlagene Halterung der Zellenbretter in der Maschine nicht zum Befüllen von Flaschen tauglich ist. Flaschen werden in aller Regel am Flaschenhals gehalten durch die Abfüllvorrichtung bewegt. Hierzu sind die Tragelemente entlang einer Reihe von Behälteraufnahmen in etwa hälftig zweigeteilt. Zum Einsetzen der Flaschen werden die Tragelementhälften angehoben und parallel zur Förderrichtung auseinander gefahren. Die Flasche in aller Regel von oben in die so geweitete Öffnung eingelassen. Im Anschluss daran werden die Tragelementhälften in ihre Ausgangsstellung zurückbewegt und umschließen den Flaschenhals.

Abgesehen davon, dass die Aufspaltung der Tragelemente in Tragelementhälften die Summenfehlerproblematik und somit das Problem der exakten Ausrichtung der Tragelemente unter den Arbeitsstationen noch einmal verschärft, gestattet EP 1 495 997 A1 das vorbeschriebene Öffnen der Zellenbretter zum Einsetzen der Flaschen nicht.

Wie eingangs beschrieben, ist es aus dem Stand der Technik bekannt, den Durchsatz einer Abfüllvorrichtung zu erhöhen, indem die Behälter zweier Tragelemente gleichzeitig an den Arbeitsstationen behandelt werden (sogenannte Doppelschrittvorrichtungen). Im Stand der Technik werden hierzu die Tragelementhälften zweier Tragelemente parallel zur Transportrichtung auseinander gefahren. Hierbei spricht man auch vom Öffnen der Zellenbretter. Die Flaschen gelangen von oben durch die geöffneten Zellenbretter bis in die Auflageebene selbiger auf der Kette. Anschließend werden die Tragelementhälften wieder zurück verfahren, bis sie auf der Antriebskette aufliegen. Hierbei spricht man vom Schließen der Zellenbretter. Beim Schließen der Zellen legen sich die Teilausnehmungen der Tragelementhälften um den Flaschenhals und halten die Flasche.

Da die Zellenbretter sehr weit auseinanderfahren müssen um den Durchtritt des Flaschenkörpers zu ermöglichen, werden die Flaschen nicht in zwei direkt benachbarte Tragelemente eingesetzt. Stattdessen werden immer zwei von einem geschlossenen Zellenbrett beabstandete Zellenbretter geöffnet. Während des Einsetzens der Flaschen in die Tragelemente werden die Flaschen von Saugelementen in ihrer Position gehalten.

Die Flaschenzuführeinrichtung aus dem Stand der Technik ist in Folge dessen mit den oberhalb des Obertrums angeordneten Zuführeinrichtungen und den unterhalb des Obertrums angeordneten Saugelementen recht aufwendig gestaltet. Letztlich ist auch der Zeitbedarf für die Öffnungsbewegung der Tragelementhälften nachteilig, da er den Maschinentakt und somit den Maschinendurchsatz limitiert.

US 2003/0159753 A1 offenbart eine Vorrichtung gemäß dem Oberbegriff des Anspruchs 1.

Aus US 2003/0159753 A1 ist es bekannt, Flaschen mit dem Flaschenhals voran und von oben - also auf dem Kopf stehend - im Obertrum zwischen die Tragelementhälften einzubringen, die hierzu eine schwenkende Öffnungsbewegung ausführen. Da die Flaschen das Obertrum kopfüber passieren, steht das Obertrum im Wesentlichen lediglich als Transporttrum zur Verfügung. Das Befüllen und Schließen der Flaschen ist während des Durchlaufens des Obertrums nicht möglich.

Aus DE 10 2006 015 842 A1 ist es bekannt, Flaschen von unten in Tragelemente einzusetzen, wobei die Tragelemente nicht teilbar sind und deshalb keine Öffnungsbewegung stattfindet. Stattdessen werden die Flaschenhälse in schlüssellochartige Ausnehmungen eingesetzt und mittels quer zur Vortriebsrichtung der Tragelemente wirkender Schubelemente verankert.

In WO 98/30491 A ist ebenfalls ein Flascheneinsetzen in Tragelemente von unteren dargestellt, wobei über die Art und Weise keine näheren Angaben gemacht sind.

Aufgabe der Erfindung ist es, eine neuartige Behälterzuführeinrichtung zu schaffen, die eine schnellere Öffnungsbewegung der Tragelemente bei wesentlicher baulicher Vereinfachung gestattet.

Gelöst wird die Aufgabe von einer Vorrichtung mit den Merkmalen des Anspruches 1.

In Abkehr von dem technisch Üblichen hat die Erfindung erkannt, dass ein zentraler baulicher Nachteil der Flaschenzuführung aus dem Stand der Technik darin zu suchen ist, dass der gesamte Flaschenkörper zwischen den Tragelementhälften durch geführt werden muss, um letztlich den im Durchmesser relativ schmalen Flaschenhals zu halten. Dieser Art der Flaschenzuführung aus dem Stand der Technik hat zur Folge, dass die notwendige große Öffnungsweite die den Arbeitstakt limitierende Öffnungszeit hervorruft. Zudem ist auch diese Art der Zuführung ursächlich dafür, dass nicht unmittelbar benachbarte sondern durch wenigstens ein Tragelement beabstandete Tragelementhälften auseinander gefahren werden müssen. Dies hat eine vergleichsweise lange bauliche Erstreckung der Flaschenzuführeinrichtung in Transportrichtung zur Folge. Auch der vergleichsweise lange Verfahrweg der die Flaschen stabilisierenden Saugelemente ist durch die Flaschenzuführung von oben bedingt.

Davon ausgehend hat die Erfindung erkannt, dass die Behälterzuführung von unten her an die Tragelemente heran wesentliche Vorteile hat. Da lediglich noch der Flaschenhals zwischen den Tragelementhälften eingebracht werden muss, ist der notwendige Bewegungsraum sowie die Bewegungszeit der sich öffnenden Tragelementhälften wesentlich vermindert. In Folge dessen können wenigstens zwei unmittelbar benachbarte Tragelemente mit Flaschen bestückt werden. Der für die Behälterzuführeinrichtung notwendige Bauraum in Förderrichtung verringert sich hierdurch wesentlich. Auch der vertikale Bewegungsraum der Flasche selbst kann wesentlich geringer gehalten werden.

Dabei ist vorgesehen, dass die Behälterzuführeinrichtung die Behälter zum Einsetzen in die Behälteraufnahmen anhebt und der Hebevorgang die Öffnungsbewegung der Tragelementhälften induziert, wobei die Tragelementhälften von einer Auflageebene vertikal in eine Öffnungsebene verfahren sind.

Im Sinne einer baulich möglichst einfachen Lösung wird die Behälterzuführeinrichtung mit der Einrichtung zum Öffnen der Tragelementhälften vereint. Hierzu ist vorgesehen, dass die vertikale Hebebewegung, mit welcher die Flaschen in Richtung Tragelemente bewegt werden, die Öffnungsbewegung wenigstens induziert. Konkret ist vorgesehen, dass die Behälterzuführeinrichtung einen Anheber umfasst, dessen auf die Tragelementhälften wirkende Vertikalbewegung die Öffnungsbewegung der Tragelementhälften durch Anheben selbiger bewirkt.

In Zusammenhang mit einer Ausführungsform, bei welcher die Tragelementhälften Führungsglieder aufweisen, die in vorrichtungsseitige Kulissen eingreifen und die Öffnungsbewegung der Tragelementhälften steuern, ist die Behälterzuführeinrichtung jene, welche auch das Öffnen der Tragelementhälften bewirkt. Hierzu ist lediglich eine Vertikalbewegung notwendig, welche die Tragelementhälften anhebt. Durch das Zusammenspiel von Führungsgliedern und Kulissen wird die Vertikalbewegung in eine Öffnungsbewegung der Tragelementhälften transformiert.

Besonders vorteilhaft hierbei ist, dass das Anheben der Behälter, insbesondere der Flaschen, sowie die Vertikalbewegung des Anhebers zum Öffnen der Tragelementhälften durch einen gemeinsamen Antrieb erfolgen kann.

Hierzu ist es lediglich notwendig, dass der Anheber mit der Plattform bewegungsgekoppelt, jedoch relativ beweglich zur Plattform angeordnet ist.

Schließlich beinhaltet die Erfindung auch ein Verfahren zum Zuführen von Behältern in eine Vorrichtung zum Befüllen von Behältern, insbesondere von Flaschen und Bechern, mit Nahrungs- und Genussmitteln, insbesondere mit dünnflüssigen bis pastösen Molkerei- und Fettprodukten, Säften, Wässern od. dgl, mit einem Obertrum, einem Untertrum und mit Ober- und Untertrum verbindenden Seitentrümern und mit einer Vielzahl Tragelementen, die endlos durch die Vorrichtung vorbei an Arbeitsstationen entlang von Ober- Seiten- und Untertrum geführt sind, wobei die Tragelemente quer zur Förderrichtung in Reihen angeordnete Aufnahmen für Behälter aufweisen.

Dieses Verfahren löst die Aufgabe, wonach die Behälterzuführung vereinfacht werden soll durch die kennzeichnenden Verfahrensschritte:
a) Beschicken von auf einer Plattform angeordneten Halteelementen mit Behältern,
b) Verfahren der Plattform an den Ort der Vorrichtung, an welchem die Behälter in die Tragelemente eingesetzt werden,
c) Anheben der Tragelementhälften aus ihrer Auflageebene zur Ausführung der Öffnungsbewegung,
d) Heben der Behälter in die Auflageebene der Tragelemente,
e) Absenken der Tragelementhälften in die Auflageebene zur Ausführung einer Schließbewegung und sicheren Halterung der Behälter in den Behälteraufnahmen.

In einer besonderen Ausführungsform des Verfahrens ist vorgesehen, dass für Verfahrensschritt c) ein Heben der Plattform erfolgt, welches einen Anheber in Anlage an die Tragelementhälften bringt, der durch eine zur Plattform relative Vertikalbewegung die die Tragelementhälften in Offenstellung verbringt.

Außerdem wird vorgeschlagen, dass für Verfahrensschritt e) der Anheber abgesenkt wird.

Weitere Vorteile der Erfindung ergeben sich aus der nachfolgenden Beschreibung in den Figuren dargestellter Ausführungsbeispiele. Es zeigen:
- Fig. 1: eine Gesamtansicht einer erfindungsgemäßen Vorrichtung,
- Fig. 2: eine Teilansicht des Obertrums der Vorrichtung gemäß Figur 1,
- Fig. 3: eine perspektivische Ansicht von auf einem Rahmen angeordneten Tragelementen,
- Fig. 4: eine Aufsicht gemäß Figur 3,
- Fig. 5: eine perspektivische Ansicht von unten des Rahmens gemäß Figur 3,
- Fig. 6: eine Ansicht von unten des Rahmens gemäß Figur 3,
- Fig. 7: eine Schnittansicht des Rahmens gemäß Schnittlinie VII in Figur 6,
- Fig. 8: eine Teilansicht des gemäß Figur 7 geschnittenen Rahmens,
- Fig. 9: eine perspektivische Ansicht des auf Laufleisten aufsitzenden Rahmens gemäß Figur 3,
- Fig. 10: eine Detaildarstellung des Verbindungselements eines Rahmens gemäß Figur 3,
- Fig. 11: eine Darstellung des Zusammenwirkens von Rolle und Laufleiste,
- Fig. 12: eine Aufsicht auf einen Rahmen gemäß Figur 3,
- Fig. 13: eine Schnittdarstellung des Rahmens gemäß Schnittlinie XIII in Figur 12,
- Fig. 14: die Darstellung eines parallel zur Förderrichtung vertikal geschnittenen, mit Behältern bestückten Rahmens,
- Fig. 15: Darstellung einer erfindungsgemäßen Behälterzuführeinrichtung in ihrer Gesamtheit,
- Fig. 16: Darstellung eines Kulissensteines gemäß Figur 15,
- Fig. 17: Vertikalschnitt durch die Behälterzuführeinrichtung gemäß Figur 15 quer zur Förderrichtung,
- Fig. 18 - 20: Darstellung der Behälterzuführeinrichtung gemäß Figur 15 in einem parallel zur Förderrichtung vorgenommenen Vertikalschnitts in verschiedenen Arbeitspositionen.

Eine Vorrichtung zum Befüllen von Behältern mit Nahrungsmitteln ist in den Figuren insgesamt mit der Bezugsziffer 10 versehen.

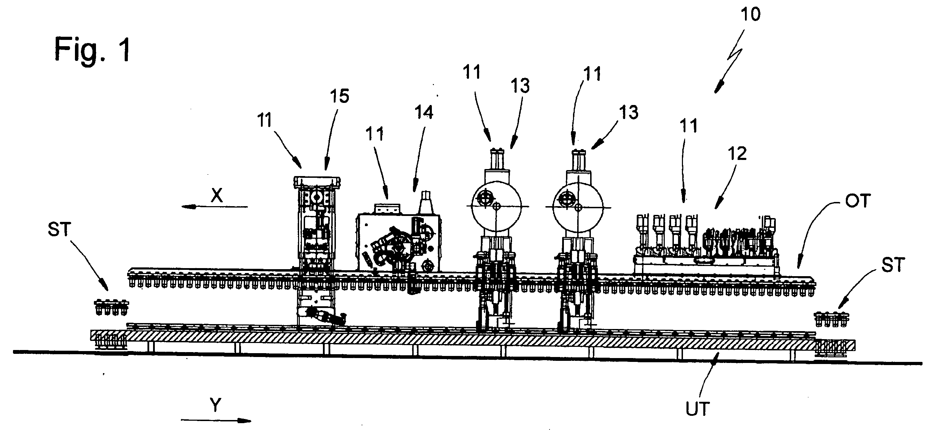

In Figur 1 ist die Vorrichtung 10 in ihrer Gesamtheit dargestellt. Die Abfüllvorrichtung für Behälter 10 verfügt über ein Obertrum OT, ein davon beabstandetes Untertrum UT sowie zwei Seitentrümer ST.

Entlang der Pfeilrichtung X werden die in Figur 1 nicht näher bezeichneten Tragelemente entlang verschiedener Arbeitsstationen 11 im Obertrum OT geführt, um über ein erstes Seitentrum ST in das Untertrum UT verbracht zu werden. Im Untertrum UT bewegen sich die Tragelemente in Pfeilrichtung Y bis zum zweiten Seitentrum ST, um von dort wieder ins Obertrum OT verbracht zu werden. Insofern laufen die Tragelemente endlos durch die Vorrichtung 10. Bei den in Figur 1 dargestellten Arbeitsstationen 11 handelt es sich im Einzelnen um eine Sterilisations- und Trocknungseinheit 12, Dosierstationen 13, eine Kappenaufsetzstation 14 sowie ein Kappenschraubstation 15.

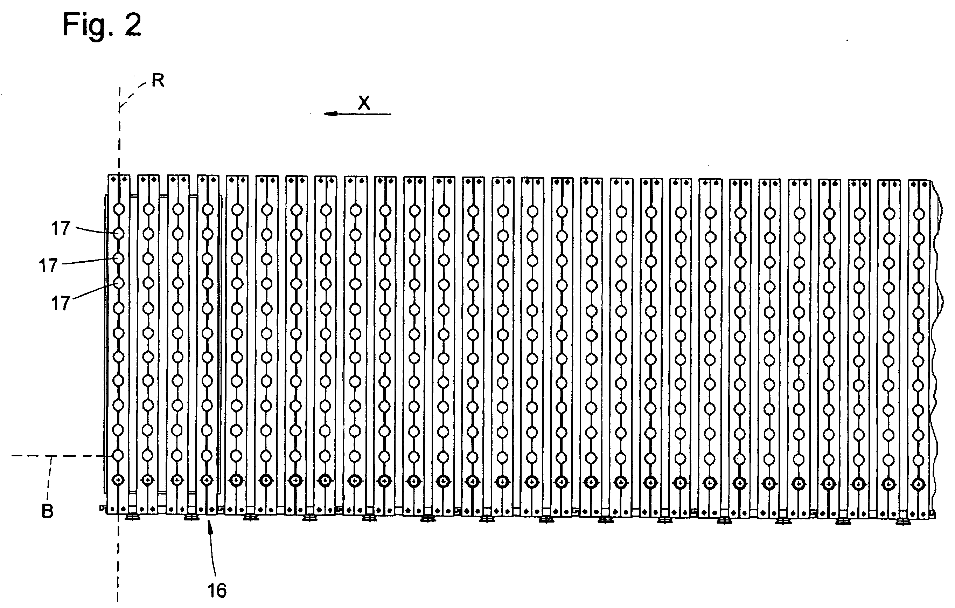

In Figur 2 ist die Aufsicht auf einen Teilabschnitt des Obertrums OT dargestellt, in welchem mehrere in Förderrichtung X hintereinander angeordnete Tragelemente 16, die auch als Zellenbretter bezeichnet werden, angeordnet sind. Jedes Tragelement 16 weist eine Vielzahl quer zur Förderrichtung X angeordneter Behälteraufnahmen 17 auf. Diese sind folglich nebeneinander in Reihen R angeordnet. Die Behälteraufnahmen mehrerer in Förderrichtung X hintereinander angeordneter Tragelemente 17 bilden parallel zur Förderrichtung X ausgerichtete Bahnen B.

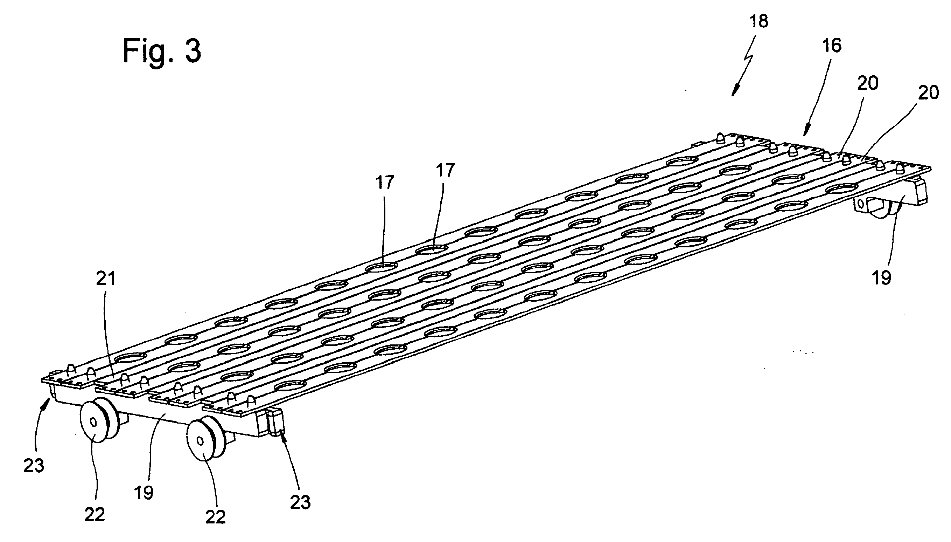

Figur 3 zeigt einen Rahmen 18, der zwei beabstandet von einander angeordnete und hinsichtlich der Förderrichtung X parallel ausgerichtete Längsprofile 19 umfasst. Die Tragelemente 16 - hier vier an der Zahl - liegen mit ihren Enden auf den Längsprofilen 19 auf. Im vorliegenden Ausführungsbeispiel bestehen die Tragelemente 16 aus zwei Tragelementhälften 20, die durch in etwa hälftiges Aufspalten der Tragelemente 16 entlang einer Reihe R erhalten sind. Die Längsprofile 19 sind mittels Querprofilen 21 aneinander angeordnet und tragen zudem Rollen 22, auf welchen der Rahmen 18 durch die Vorrichtung 10 geführt ist. An ihren Enden bilden die Längsprofile 19 Verbindungselemente 23 aus, die später genauer beschrieben werden und mit denen sich mehrere Rahmen 18 miteinander koppeln lassen.

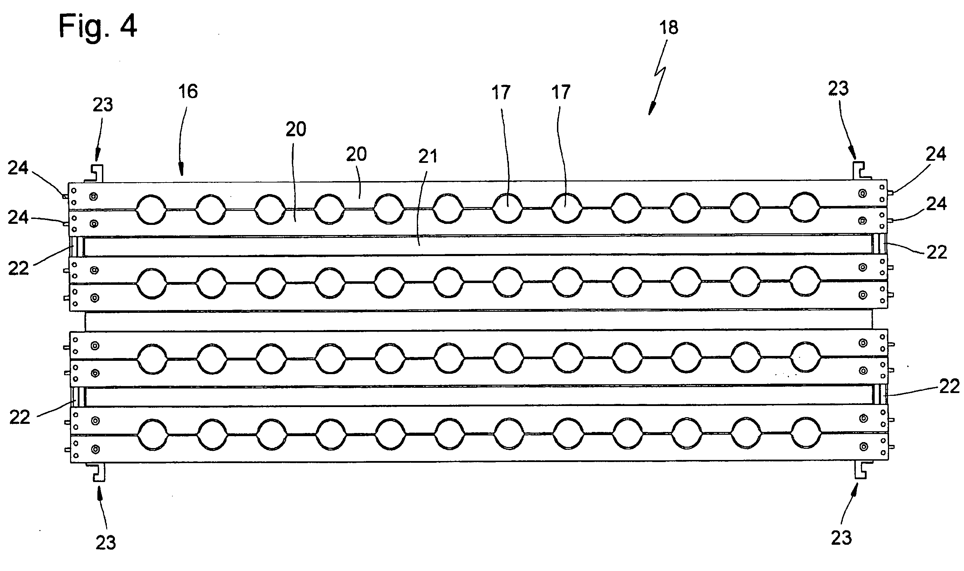

Aus Figur 4, welche eine Aufsicht auf den in Figur 3 dargestellten Rahmen 18 ist, wird dessen Aufbau noch einmal deutlich. Neben den zuvor beschriebenen Bauteilen sind hier an den parallel zur Förderrichtung X ausgerichteten Enden der Tragelementhälften 20 Führungsglieder 24 angebracht, die der Steuerung einer Öffnungsbewegung der Tragelementhälften 20 dienen.

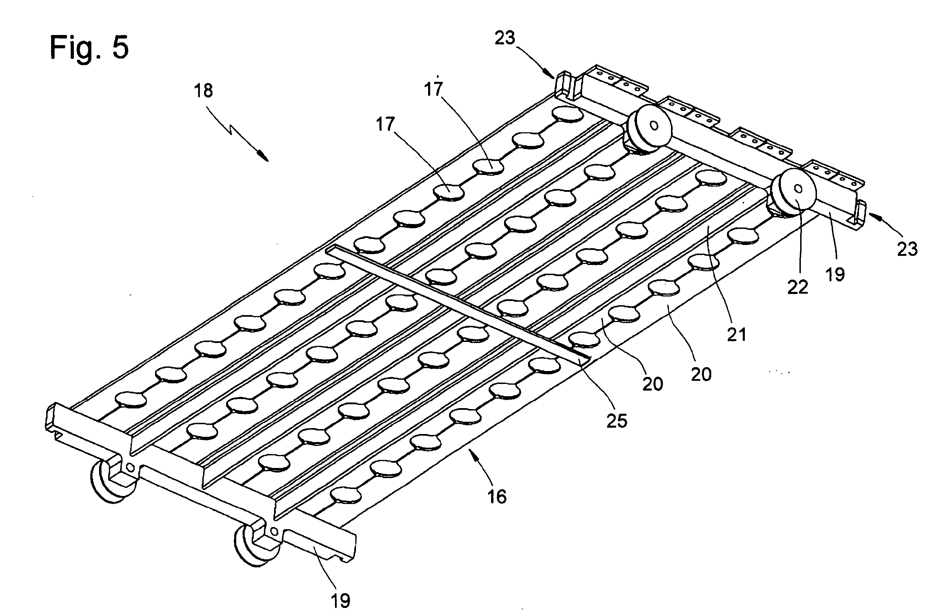

Eine Ansicht des Rahmens 18 von unten gemäß Figur 3 zeigt Figur 5. Aus dieser Darstellung ist ersichtlich, dass die Querprofile 21 unterhalb der Tragelemente 16 eine Auflageschiene 25 halten. Die Auflageschiene 25 ist etwa mittig zwischen den Längsprofilen 19 des Rahmens 18 angeordnet. Die Auflageschiene 25 dient der Stabilisierung der Tragelemente 16, damit diese - bedingt durch ihr Eigengewicht oder das Gewicht befüllter Behälter - nicht in der Mitte durchhängen. Das Querprofil 21 ist, wie aus dieser Figur gut ersichtlich ist, aus statischen Gründen als T-Profil ausgebildet.

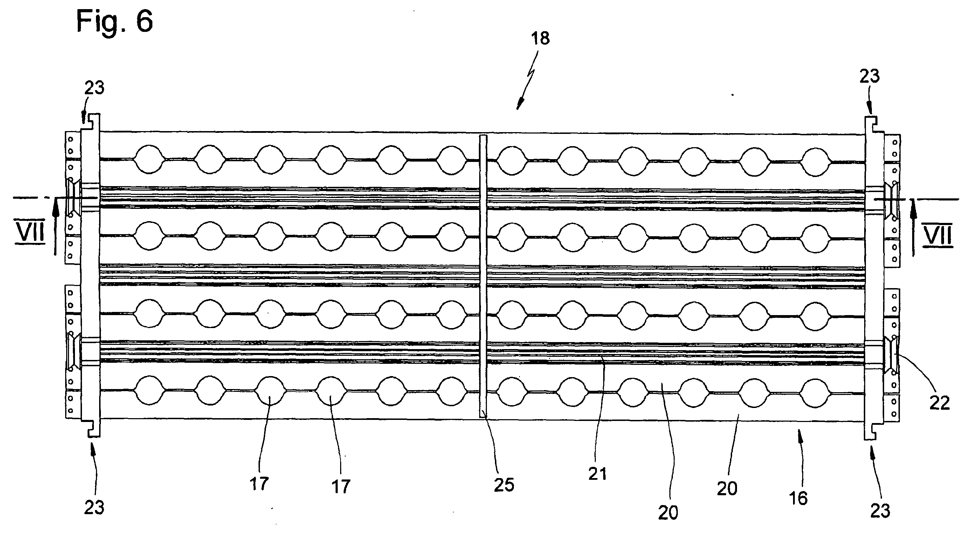

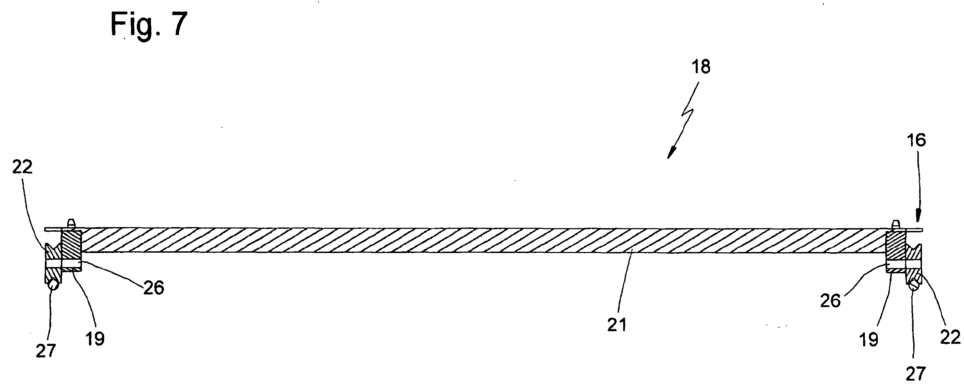

Figur 6 zeigt die Aufsicht auf die Unterseite des Rahmens 18. Diese Figur ist gegenüber Figur 5 um die Darstellung der Lage der Schnittebene VII ergänzt, entlang derer der Rahmen 18 gemäß Figur 7 vertikal geschnitten ist.

Aus der Schnittansicht der Figur 7 ist zunächst ersichtlich, dass jede Rolle 22 auf einer Rollenachse 26 drehbar angeordnet ist. Die Rollenachse 26 ist ihrerseits im Längsprofil 19 des Rahmens verankert. Außerdem ist aus Figur 7 ersichtlich, dass die Rollen 22 des Rahmens 18 auf Laufleisten 27 der Vorrichtung 10 aufliegen.

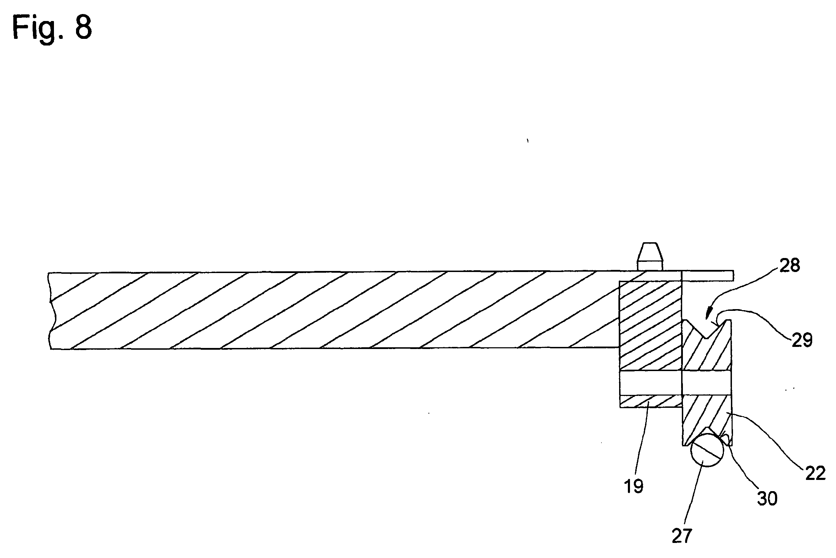

In Figur 8 ist eine Teilansicht des Schnittes gemäß Figur 7 dargestellt. Aus diesem ist besonders gut ersichtlich, dass die Rolle 22 eine umfänglich umlaufende in etwa V- bzw. dachförmige Nut 28 aufweist. In Folge dessen ist die Querschnittskontur der Lauffläche 29 der Rolle 22 ebenfalls in etwa V-förmig. Die als Laufleiste 27 ausgebildete Laufbahn weist einen kreisförmigen Querschnitt auf. Die Lauffläche 30 der Laufleiste 27 wird durch den der Rolle 22 zugewandten Oberflächenbereich gebildet. Wie aus Figur 8 ersichtlich, liegt die Laufleiste 27 mit ihrer Lauffläche 30 in der V-förmigen Nut der Rolle 22 ein, so dass die Laufflächen 29 und 30 einander tangieren.

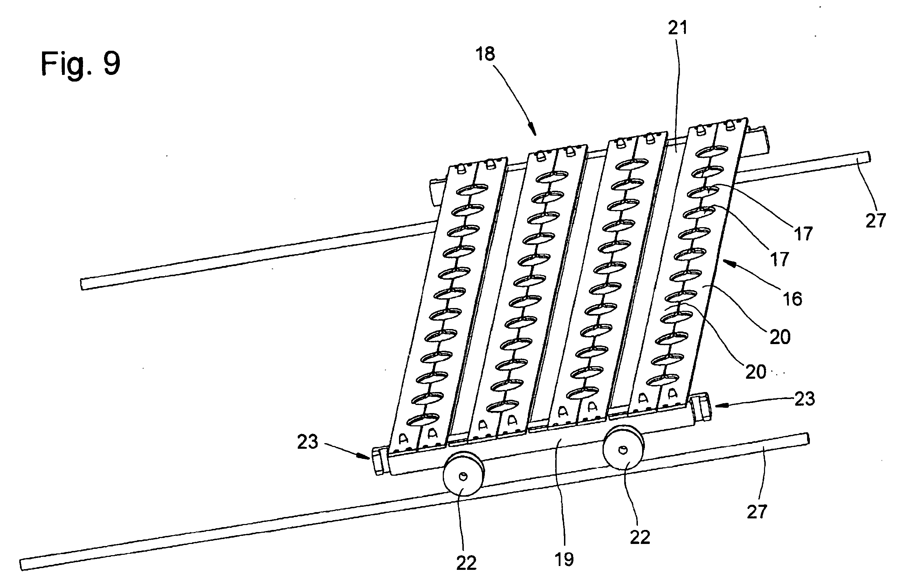

Die Darstellung der Figur 9 zeigt einen Rahmen 18, der auf den Laufleisten 27 der Vorrichtung 10 aufliegt. Die Laufleisten 27 sind sowohl im Obertrum OT wie im Untertrum UT angeordnet, so dass die Rahmen 18 mit den Tragelementen 16 auf den Laufleisten 27 durch die Vorrichtung 10 endlos geführt sind.

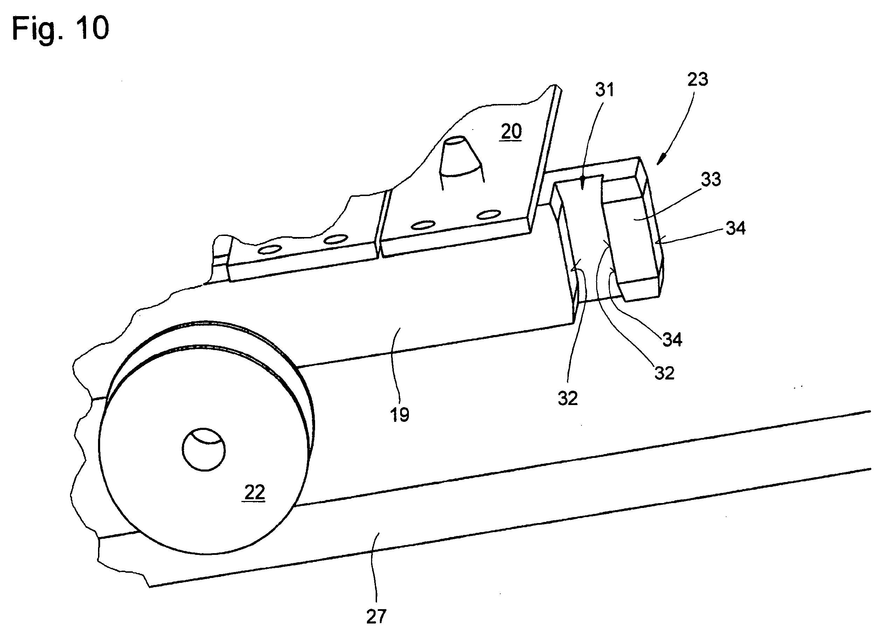

Figur 10 zeigt eine Ausschnittsvergrößerung, anhand derer der Aufbau des Verbindungselementes 23 des Längsprofils 19 näher erläutert wird. Das Verbindungselement 23 ist Teil des Längsprofils 19 und jeweils an seinen zu einem benachbarten Rahmen 18 weisenden Enden angeordnet. Es umfasst zunächst eine vertikal ausgerichtete Nut 31 mit in etwa konkav ausgebildeten Nutseitenwänden 32. Unmittelbar benachbart zur Nut 31 bildet das Längsprofil 19 ein Koppelglied 33 aus. Die lageparallel zu den Nutseitenwänden 32 ausgerichteten Seitenwangen 34 des Koppelgliedes 33 sind konvex ausgebildet.

In der in Figur 10 dargestellten Ausführungsform sind Nut 31 und Koppelglied 33 derart ausgebildet, dass die zum Koppelglied 33 benachbarte konkave Nutseitenwand 32 gleichzeitig die konvexe Seitenwangen 34 des Koppelgliedes 33 bildet. Die der Nut abgewandte Seitenwange 34 bildet gleichzeitig die Stirnwand des Längsträgers 19. Die Nuten 31 beabstanden somit die Koppelglieder 33 von den Tragelementen 16. Festzuhalten ist noch, dass einander zugewandte Verbindungselemente 23 von benachbarten Rahmen 18 zueinander spiegelbildlich ausgebildet sind.

Die Verbindungselemente 23 benachbarter Rahmen 18 greifen während der Bewegung entlang des Ober- und Untertrums OT/UT ineinander ein. Benachbarte Rahmen 18 sind so aneinander festgelegt. Insofern können die getaktet durch die Vorrichtung 10 bewegten Rahmen 18 kontrolliert beschleunigt und gebremst werden. Das Koppelglied 33 ist in seiner in Bewegungsrichtung gemessenen Breite im Bereich der Scheitellinien der konvexen Seitenwandungen 34 derart bemessen, dass es im Wesentlichen spielfrei in der Nut 31 einliegt, wenn die Scheitellinien der Nutseitenwände 32 mit den Scheitellinien der Seitenwangen 34 in etwa in einer Ebene angeordnet sind. Hierdurch wird eine übermäßige Geräuschentwicklung beim Beschleunigen und Verzögern der Rahmen 18 durch Aneinanderschlagen von Verbindungselementen 23 benachbarter Rahmen 18 vermieden.

Die Kopplung der Rahmen 18 wird getrennt, indem benachbarte Rahmen 18 relativ zueinander vertikal bewegt werden. Hierbei gleiten die Koppelemente 33 aus den Nuten 31. Diese Vertikalbewegung findet statt, wenn ein Rahmen 18 über das Seitentrum ST in das Untertrum UT wechselt.

Gegenüber dem Stand der Technik, in welchem die Tragelemente 16 direkt gegeneinander stoßen, bietet die Anordnung selbiger auf den Rahmen 18 erhebliche Vorteile. Zunächst vermindern sich die Summenfehler, die zu einer fehlerhaften Ausrichtung der Tragelemente zu den Arbeitsstationen führen, um den Faktor, welcher der Anzahl der auf den Rahmen montierten Tragelementen 16 entspricht. Solchen Summenfehler treten auf, wenn im Stand der Technik Schmutzpartikel zwischen benachbarten Tragelementen 16 zur Anlage kommen.

Da mehrere Tragelemente 16 auf einen Rahmen 18 angeordnet sind und vermittels der Rahmen 18 durch die Vorrichtung 19 bewegt werden, verringern sich die Summenfehler erheblich. Bei den im Ausführungsbeispiel dargestellten Rahmen, welche vier Tragelemente 16 tragen, reduziert sich der Summenfehler um den Faktor 4.

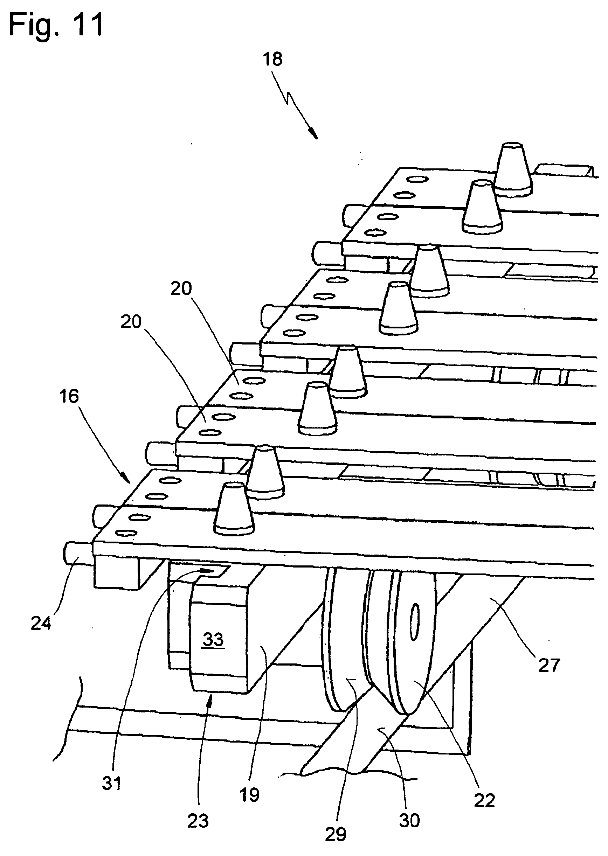

In Figur 11 ist der auf der Laufleiste 27 durch die Vorrichtung 10 geführte Rahmen 18 in perspektivischer Teilansicht dargestellt. Ein besonderes Augenmerk ist zu legen auf das zentrierende Zusammenspiel von Rolle 22 und Laufleiste 27. Die Geometrie der Laufflächen 29 ist in etwa V-förmig. Die im Querschnitt teilkreisförmige Lauffläche 30 der Laufleiste 27 liegt in der V-förmigen Nut der Rolle, welche die rollenseitigen Laufflächen 29 ausbildet, ein. Es ist leicht ersichtlich, dass bei der Bewegung des Rahmens 18 durch die Vorrichtung die Laufleiste 27 grundsätzlich tiefstmöglich in der V-förmigen Nut der Rollen 22 einliegt. Sofern keine Querkräfte auftreten wird die Rolle 22 zentriert auf der Laufleiste 27 geführt. So ist eine sichere Zentrierung der Rahmen 18 quer zur Förderrichtung gewährleistet, womit sichergestellt ist, dass die Rahmen 18, insbesondere die Tragelemente 16 mit ihren Behälteraufnahmen 17 korrekt zu den Arbeitsstationen 11 ausgerichtet sind.

Sofern beim Betrieb der Vorrichtung durch Störeinflüsse Querkräfte auf die Rahmen 18 wirken, die selbige dezentrieren, gleiten die Rahmen 18 aufgrund der zusammenwirkenden Geometrien von Laufleisten 27 und Rollen 22 nach Fortfall der Querkräfte sofort zurück in ihre korrekte Position.

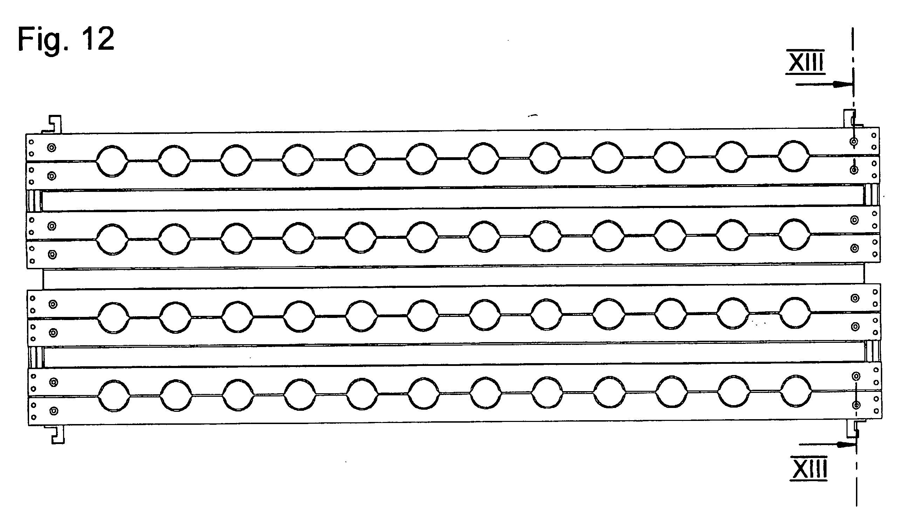

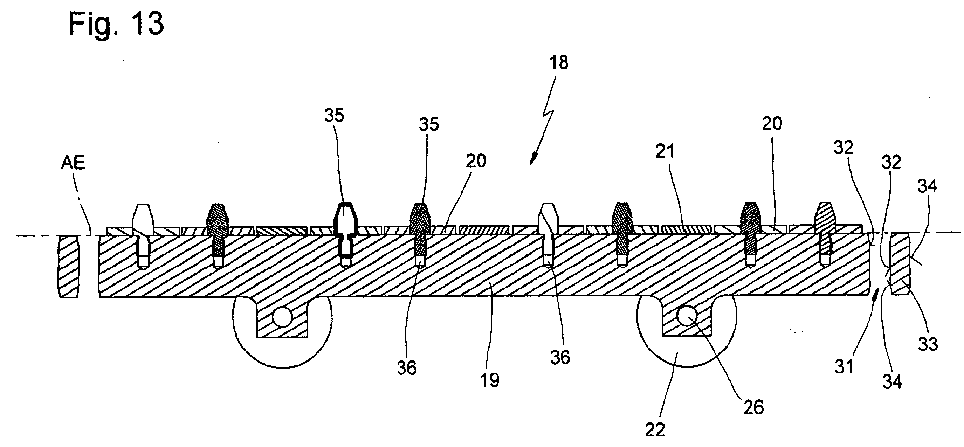

Figur 13 ist eine Schnittansicht durch den Rahmen 18 entlang seines Längsprofils 19 gemäß Schnittlinie XIII in Figur 12. Die Tragelementhälften 20 sind von Stiften 35 gehalten, in Vertikalrichtung jedoch beweglich auf dem Rahmen angeordnet. Die Stifte 34 sind in vom Längsprofil 19 ausgebildete Bohrungen 36 eingesetzt. Die vertikal bewegliche Lagerung der Tragelementhälften 20 ist insbesondere für solche Abfüllvorrichtung 10 notwendig, welche dem Befüllen von Flaschen dienen.

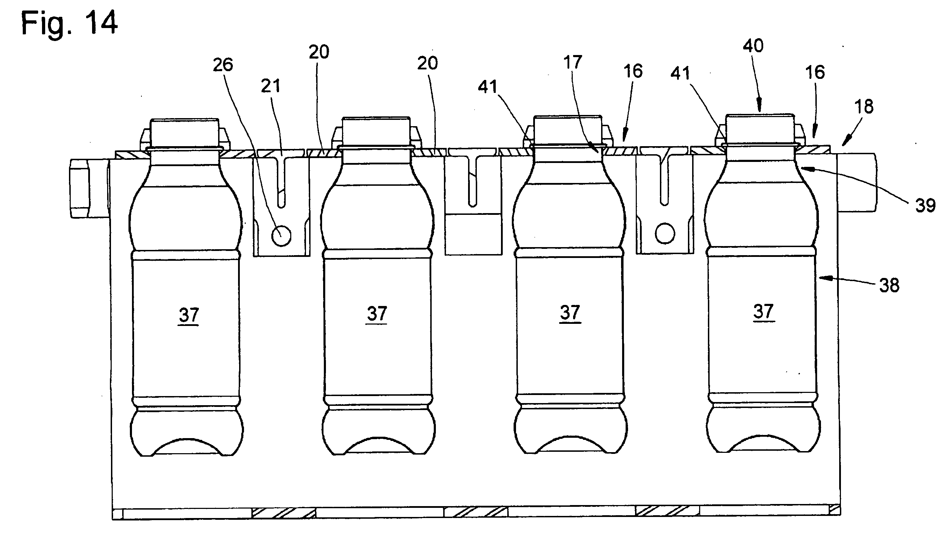

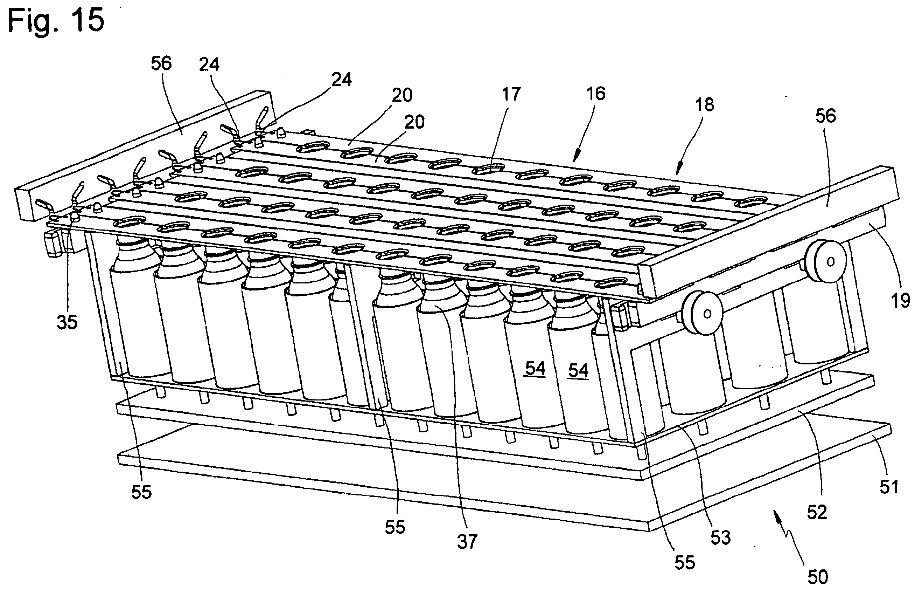

Die in Figur 14 in die Tragelemente 16 eines Rahmens 18 eingehängten Flaschen 37 umfassen einen Flaschenkörper 38, der in einen Flaschenhals 39 unter Verjüngung des Flaschendurchmessers übergeht. Der Flaschenhals 39 ist nahe der Flaschenöffnung 40 mit einem radial vorstehenden Flaschenkragen 41 versehen. Die Flaschen 37 sind mit ihrem Flaschenhals 39 in je einer Behälteraufnahme 17 eingesetzt. Der Flaschenkörper 38 befindet sich dabei unterhalb der Tragelemente 16, der Flaschenkragen 41 liegt auf selbigem auf. Zum Einsetzen der Flaschen in die Behälteraufnahmen 17 der Tragelemente 16 schlägt die Erfindung eine neuartige Behälterzuführeinrichtung vor, die in ihrer Gesamtheit mit der Bezugsziffer 50 versehen ist. Diese wird im Folgenden anhand der Figuren 15 bis 20 beschrieben.

Figur 15 zeigt die Behälterzuführeinrichtung 50 unterhalb eines mit Tragelementen 16 versehenen Rahmens 18. Wie durchgängig in den Figuren dargestellt, bestehen die Tragelemente 16 aus jeweils zwei Tragelementhälften 20, die jeweils mit Teilaussparungen versehen sind. Korrespondierende, paarweise einander zugewandte Teilaussparungen bilden gemeinsam eine Behälteraufnahme 17.

Die Behälterzuführeinrichtung 50 umfasst eine Grundplatte 51, oberhalb derer eine Flaschenhebeplatte 52 angeordnet ist. Oberhalb der Flaschenhebeplatte 52 wiederum ist eine Flaschenhalteplatte 53 angeordnet. Auf der Flaschenhalteplatte 53 sind, entsprechend der Anzahl der Behälteraufnahmen 17, hülsenförmige Flaschenhalter 54 aufgesetzt. Auf der Flaschenhalteplatte 53 sind weiterhin Tragelement-Anheber 55 angeordnet. Die in die Tragelemente 16 einzusetzenden Flaschen 37 sitzen innerhalb der Flaschenhalter 54 ein. Im Bereich der Behälterzuführeinrichtung 50 weist die Vorrichtung 10 Kulissensteine 56 auf, welche parallel zu den Längsträgern 19 des Rahmens 18 und oberhalb der Tragelemente 16 angeordnet sind. Die Grundplatte 51, die Flaschenhebeplatte 52 sowie die Flaschenhalteplatte 53 sind über einen nicht dargestellten Antrieb vertikal bewegbar, wobei jede der Platten 51 bis 53 relativ zueinander vertikal beweglich verfahrbar sind.

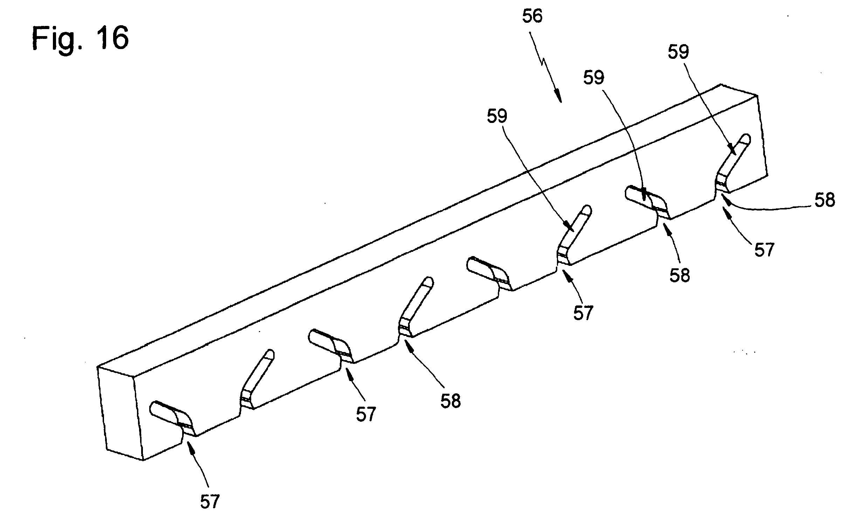

Gemäß Figur 16 weist jeder Kulissenstein 56 Kulissenführungen 57 auf, die einen vertikal gerichteten Einführabschnitt 58 für die Führungsglieder 24 der Tragelementhälften 20 aufweisen. Jeweils zwei benachbarte Kulissen 57 bilden ein Kulissenpaar. Die sich an den vertikalen Einführabschnitt 58 anschließenden Schrägabschnitte 59 eines jeden Kulissenpaares sind entgegengesetzt gerichtet. Jedes Kulissenpaar besteht folglich aus spiegelbildlich zueinander ausgebildeten Kulissenführungen 57.

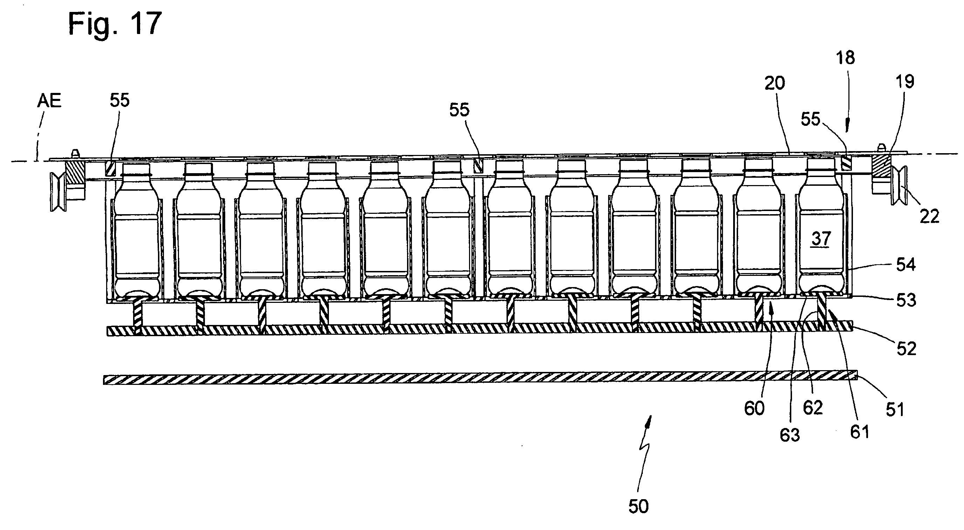

In Figur 17 ist die Behälterzuführeinrichtung 50 in einem Vertikalschnitt dargestellt, wobei Schnittebene quer zur Förderrichtung liegt. Aus dieser Schnittdarstellung ist ersichtlich, dass die Flaschenhalteplatte 53 im Bereich eines jeden Flaschenhalters 54 eine Durchbrechung 60 aufweist. In jeder Durchbrechung 60 sitzt ein auf der Flaschenhebeplatte 52 befestigter Flaschenheber 61 ein. Der Flaschenheber 61 umfasst eine einenends auf der Flaschenhebeplatte 52 befestigte, vertikal ausgerichtete Flaschenheberstütze 62 sowie einen anderenends auf der Flaschenheberstütze 62 befestigten Flaschenheberteller 63. Die Flasche 37 sitzt mit ihrem Flaschenboden auf dem Flaschenheberteller 63 auf.

Anhand der Figuren 17 bis 20 wird nunmehr die Funktion der Behälterzuführeinrichtung 50 beschrieben. Im Bereich einer Behälterbestückung, die außerhalb von Obertrum OT bzw. Untertrum UT an der Vorrichtung angeordnet ist, werden die Flaschenhalter 54 der Behälterzuführeinrichtung 50 mit Flaschen 37 bestückt. Sodann wird die Behälterzuführeinrichtung in den Bereich von Obert- oder Untertrum OT/UT verfahren, an welchem die Flaschen 37 in die Tragelemente 16 eingesetzt werden. In der in Figur 17 dargestellten Ausgangsstellung der Behälterzuführeinrichtung 50 liegen die Anheber 55 an der Unterseite der Tragelementhälften 20 an. Die Flaschenhälse 39 befinden sich unterhalb der Tragelemente 16.

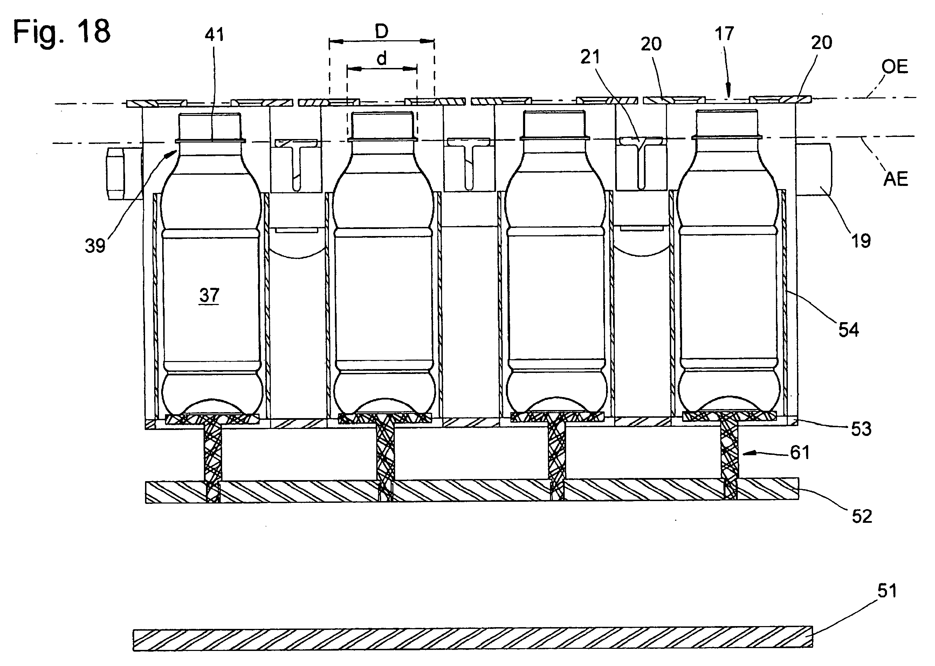

Die Figuren 18 bis 20 zeigen einen Vertikalschnitt durch einen Rahmen 18 und einer darunter angeordnete Behälterzuführeinrichtung 50, wobei die Schnittebene parallel zur Förderrichtung angeordnet ist. Im Gegensatz zur Ausgangslage der Behälterzuführeinrichtung, welche in Figur 17 dargestellt ist, ist in Figur 18 die Öffnungsposition dargestellt. Die Einheit aus Flaschenhebeplatte 52 und Flaschenhalteplatte 53 ist relativ zur Grundplatte 51 vertikal angehoben worden. Die in Figur 18 nicht dargestellten Anheber 55 bewegen in Folge dessen die Tragelementhälften 20 ebenfalls vertikal nach oben. Die Tragelementhälften 20 verlassen den Wirkbereich der Stifte 35. Gleichzeitig greifen die Führungsglieder 24 in die vertikalen Einführabschnitte 58 der Kulissensteine 56 ein. Im Weiteren gelangen die Führungsglieder 24 in die Schrägabschnitte 59 der Kulissen 57, welche die Vertikalbewegung der Tragelementhälften 20 in eine Lateralbewegung transformieren. In Folge dessen werden die Tragelementhälften 20 eines Tragelementes 16 voneinander beabstandet, wodurch sich die Behälteraufnahmen 17 weiten. Hierzu werden die Tragelementhälften 20 von ihrer Auflageebene AE (die Ebene, in der sie auf dem Längsträger 19 aufliegen) in die Öffnungsebene OE verfahren. Das Weiten der Behälteraufnahmen 17 bzw. die durch die Kulissen gesteuerte Lateralbewegung der Tragelementhälfte 20 lässt sich insbesondere aus deren Relativposition zu den Querprofilen 21 erkennen. Während die Querprofile 21 in der Schnittdarstellung der Figur 13 zwischen zwei Tragelementen 16 angeordnet sind, überdecken die einander benachbarten Tragelementhälften 20 zweier Tragelemente 16 diese, wenn in der Öffnungsebene OE angeordnet sind.

Es ist weiterhin der Figur 18 entnehmbar, dass die Flaschenhälse 39 mit ihren Flaschenkragen 41 einen geringeren Durchmesser d aufweisen, als die geweiteten Behälteraufnahmen 17 mit ihrer Öffnungsweite D.

Durch die gemeinsame Vertikalbewegung von Flaschenhebeplatte 52 und Flaschenhalteplatte 53 geraten die Flaschenhälse 39 in die Auflageebene AE. Dabei ist sicher gestellt, dass die Flaschenkragen 41 oberhalb der Auflageebene AE angeordnet sind. Insgesamt wurde die Einheit aus Flaschenhebeplatte 52 und Flaschenhalteplatte 53 um den Abstand zwischen Auflageebene AE und Öffnungsebene OE der Tragelementhälften 20 vertikal nach oben bewegt.

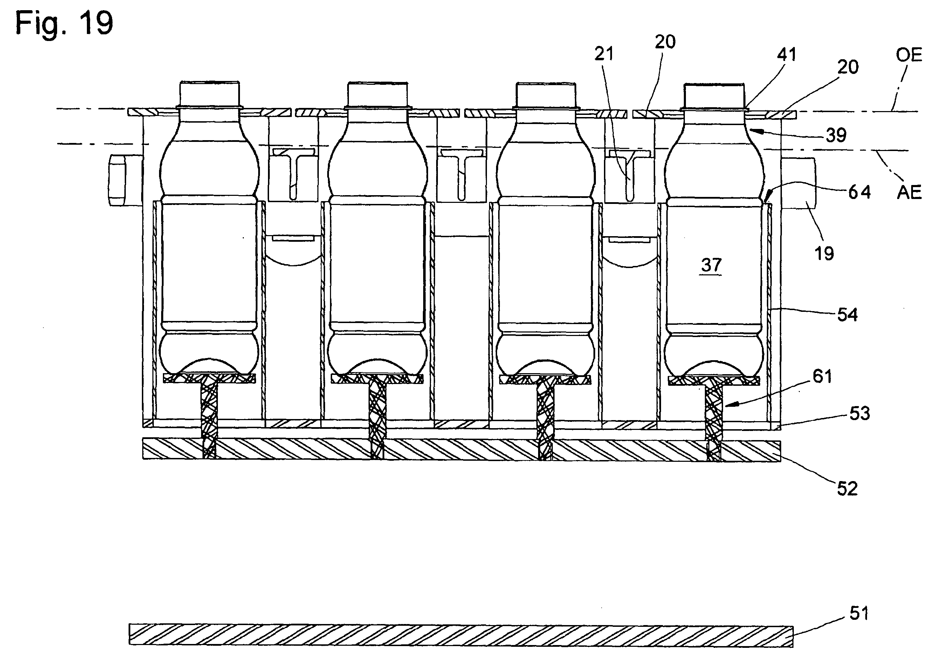

In Figur 19 ist die Flascheneinsetzstellung der Behälterzuführeinrichtung 50 dargestellt. Wie im Vergleich zu Figur 18 ersichtlich ist, wurde zum Erreichen dieser Position die Flaschenhebeplatte 52 relativ zur Flaschenhalteplatte 53 vertikal nach oben bewegt. Über die mit der Flaschenhebeplatte 52 gekoppelten Flaschenheber 61 werden die Flaschen 37 ebenfalls vertikal nach oben bewegt, wobei die Flaschenheber 61 in die Flaschenhalter 54 eintauchen. Durch die Vertikalbewegung der Flaschenhebeplatte 52 werden die Flaschenhälse 39 in die Öffnungsebene OE der Tragelementhälften 20 verfahren. Dabei liegen die Flaschenkragen 41 oberhalb der Tragelementhälften 20.

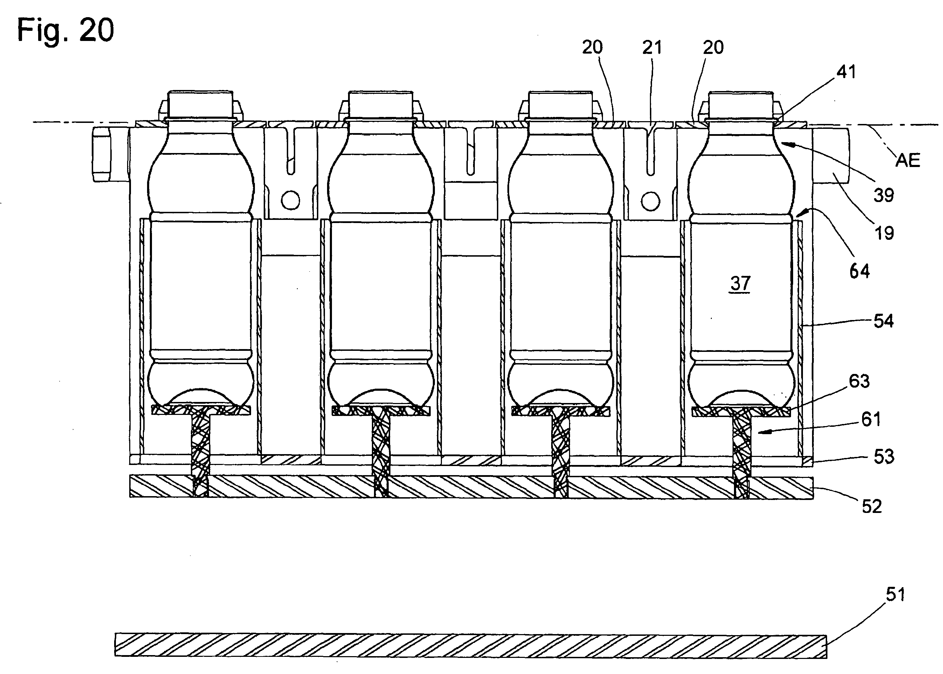

In Figur 20 ist die Schließstellung der Behälterzuführeinrichtung 50 dargestellt. Die Einheit aus Flaschenhalteplatte 53 und Flaschenhebeplatte 52 bewegt sich in ihrer Gesamtheit zum Erreichen der Schließstellung in Figur 20 relativ zur Grundplatte 51 nach unten. Die auf den hier nicht dargestellten Anhebern 55 lagernden Tragelementhälften 20 folgen der Abwärtsbewegung. Hierbei sorgt die Kulissenführungen 57, in welcher die Führungsglieder 24 einsitzen, für die der Öffnungsbewegung entgegengesetzte Schließbewegung der Tragelementhälften 20. Nach Abschluss der Schließbewegung liegen die Tragelementhälften 20 wieder in der Auflageebene AE. Die laterale Rückverlagerung der Tragelementhälften 20 ist wiederum an deren Relativposition zu den Querprofilen 21 zu erkennen. Diese liegen nun wieder ebenengleich zwischen den Tragelementhälften 20 zweier benachbarter Tragelemente 16. Die erfolgte Relativbewegung nach unten lässt sich im Vergleich der Figuren 19 und 20 auch an dem Abstand zwischen der oberen Öffnung 64 der Flaschenhalter 54 und dem Querprofil 19 erkennen.

Nach Abschluss der Schließbewegung wird die Flaschenhebeplatte 52 noch soweit abgesenkt, dass die Flaschenheberteller 63 wieder in der Ebene der Flaschenhalteplatte 53 angeordnet sind. Im Weiteren wird die Behälterzuführeinrichtung 50 so weit abgesenkt, dass die Flaschenhalter 54 die Flaschen 37 freigeben.

Es ist ohne weitere Schwierigkeit erkennbar, dass die vorbeschriebene Behälterzuführeinrichtung 50 lediglich unter Umkehr des Bewegungsablaufes auch als Behälterentnahmeeinrichtung nutzbar ist. In diesem Fall bildet Figur 20 die Ausgangsstellung. Die Flaschen 37 sitzen in Flaschenhalter 54 ein. Der Flaschenheber 61 hält bereits den Flaschenboden. Im Wechsel zu Figur 19 wurde die Einheit aus Flaschenhalteplatte 53 und Flaschenhebeplatte 52 vertikal nach oben verlagert, so dass die in Figur 20 nicht dargestellten, jedoch an der Unterseite der Tragelementhälften 20 anliegenden Anheber 55 die Tragelementhälften vertikal oben bewegen. Aufgrund des Eingriffes der Führungsglieder 24 in die Kulissenführungen 57 erfolgt eine Lateralverlagerung der Tragelementhälften 20 und somit eine Öffnung der Behälteraufnahmen 17. Im Anschluss daran und im Übergang zur Figur 18 verfährt die Flaschenhebeplatte 52 relativ zur Flaschenhalteplatte 53 relativ nach unten, die Flaschen werden in Folge dessen gegenüber den Tragelementhälften 20 abgesenkt. Ein anschließendes Verfahren von Flaschenhebeplatte 52 und Flaschenhalteplatte 53 um das identische Maß nach unten relativ zur Grundplatte 51 bewegt die auch in Figur 18 nicht dargestellten Anheber 55 ebenfalls nach unten. Der Anheberbewegung folgen die Tragelementhälften 20, woraufhin sich die Tragelementhälften, geführt durch die Kulissen 57, wieder schließen. Nach der Schließbewegung befindet sich die Behälterentnahmeeinrichtung relativ zum Rahmen 18 in der in Figur 17 dargestellten Position, die dort als Ausgangsstellung der Behälterzuführeinrichtung 50 beschrieben wurde. Um den Entnahmevorgang abzuschließen, muss nunmehr die Behälterentnahmevorrichtung den Entnahmeort im Ober- bzw. Untertrum verlassen. Die Flaschen werden von einer weiteren, nicht näher beschriebenen Einrichtung aus den Flaschenhaltern 54 entnommen und für den weiteren Transport zu Gebinden zusammengestellt.

Zusammenfassend wurde zunächst eine Lösung vorgestellt, bei welcher Tragelemente 17 für Behälter 37, die auf Rollen 22 durch die Abfüllvorrichtung 10 geführt sind, quer zur Förderrichtung zentrierbar sind. Diese ist besonders einfach durch einen Formeingriff von Rolle 22 und Laufleiste 27 gebildet.

Des Weiteren wurde ein Rahmen 18 vorgestellt, auf welchem die Tragelemente 16 in Gruppen angeordnet durch die Vorrichtung 10 verfahrbar sind. Dies hat hinsichtlich der Ausrichtung der Tragelemente 16 in Förderrichtung wesentlich verbessert, da sie bei einer Vorrichtung, die die Tragelemente 16 - Tragelement 16 an Tragelement 16 - durch die Vorrichtung 10 schiebt, den möglichen Summenfehler durch Verschmutzungen zwischen den Tragelementen 16 erheblich verringert. Zudem erlauben die Rahmen 18 eine Kopplung aneinander, die ein kontrolliertes Beschleunigen und Verzögern ermöglicht.

Letztlich wurde eine neuartige Behälterzuführeinrichtung 50 offenbart, die ebenso geeignet ist, als Behälterentnahmevorrichtung zu dienen. Der wesentliche Vorteil der Behälterzuführeinrichtung 50 ist es, aufgrund der Behälterzuführung zu den Tragelementen 16 von unten den Öffnungsweg der Tragelementhälften 20 zu verringern. In Folge dessen können direkt benachbarte Tragelemente 16 gleichzeitig mit Behältern 37 geschickt werden. Zudem ist es gegenüber dem aus dem Stand der Technik bekannten Doppelschrittmaschinen möglich, bei vertretbarem Bauraum mehr als zwei Tragelemente 16 gleichzeitig mit Behältern 37 zu versehen. In Folge dessen lässt sich der Durchsatz und somit auch die Rentabilität einer Abfüllvorrichtung 10 wesentlich erhöhen.

### Bezugszeichenliste:

- 10: Vorrichtung
- 11: Arbeitsstation
- 12: Sterilisations- und Trocknungseinheit
- 13: Dosierstation
- 14: Kappenaufsetzstation
- 15: Kappenschraubstation
- 16: Tragelemente
- 17: Behälteraufnahmen
- 18: Rahmen
- 19: Längsprofile von 18
- 20: Tragelementhälfte
- 21: Querprofil von 18
- 22: Rollen von 18
- 23: Verbindungselement von 19
- 24: Führungsglieder
- 25: Auflageschiene
- 26: Rollenachse
- 27: Laufleiste
- 28: V- bzw. dachförmige Nut von 22
- 29: Lauffläche von 22
- 30: Lauffläche von 27
- 31: Nut
- 32: Nutseitenwand von 31
- 33: Koppelglied
- 34: Seitenwangen von 33
- 35: Stift
- 36: Bohrung
- 37: Flasche
- 38: Flaschenkörper
- 39: Flaschenhals
- 40: Flaschenöffnung
- 41: Flaschenkragen

- 50: Behälterzuführeinrichtung
- 51: Grundplatte
- 52: Flaschenhebeplatte
- 53: Flaschenhalteplatte
- 54: Flaschenhalter
- 55: Anheber
- 56: Kulissensteine
- 57: Kulissenführung
- 58: vertikaler Einführabschnitt von 57
- 59: Schrägabschnitt
- 60: Durchbrechung von 53
- 61: Flaschenheber
- 62: Flaschenheberstütze
- 63: Flaschenheberteller
- 64: obere Öffnung von 54

- AE: Auflageebene
- OE: Öffnungsebene
- OT: Obertrum
- UT: Untertrum
- ST: Seitentrum
- R: Reihe von Behälteraufnahmen 17 eines Tragelementes 16
- B: Bahnen von Behälteraufnahmen 17
- X: Bewegungsrichtung der Tragelemente im Obertrum
- Y: Bewegungsrichtung der Tragelemente im Untertrum

## Patentansprüche

1. Vorrichtung (10) zum Befüllen von Behältern, insbesondere von Flaschen (37) und Bechern, mit Nahrungs- und Genussmittel, insbesondere mit dünnflüssigen bis pastösen Molkerei- und Fettprodukten, Säften, Wässern od. dgl,
- mit einem Obertrum, (OT) einem Untertrum (UT) und mit Ober- und Untertrum (OT, UT) verbindenden Seitentrümern (ST),
- mit einer Vielzahl von Tragelementen (16), die endlos durch die Vorrichtung (10) vorbei an Arbeitsstationen (11) entlang von Ober- Seiten- und Untertrum (OT, ST, UT) geführt sind,
- wobei die Tragelemente (16) quer zur Förderrichtung (X/Y) in Reihen angeordnete Aufnahmen für Behälter aufweisen die in Förderrichtung in Bahnen (B) angeordnet sind,
- wobei die Tragelemente (16) entlang einer Reihe (2) von Aufnahmen (17) in etwa hälftig geteilt sind,
- paarweise einander zugeordnete Teilaussparungen benachbarter Tragelementhälften (20) gemeinsam eine Behälteraufnahme (17) bilden und
- die Tragelementhälften (20) derart in der Vorrichtung (10) gelagert sind, dass sie eine die Behälteraufnahmen (17) weitende Öffnungsbewegung ausführen können und
- mit einer Behälterzuführeinrichtung (50), **dadurch gekennzeichnet, dass** die Behälterzuführeinrichtung (50) die Behälter von unten den Tragelementen (17) zuführt, wobei die Behälterzuführeinrichtung (50) die Behälter zum Einsetzen in die Behälteraufnahmen (17) anhebt und der Hebevorgang die Öffnungsbewegung der Tragelementhälften (20) induziert, und Anspruch 2 in Anspruch 1 aufnehmen die Behälterzuführeinrichtung (50) einen Anheber (55) umfasst, dessen auf die Tragelementhälften (20) wirkende Vertikalbewegung die Öffnungsbewegung der Tragelementhälften (20) durch Anheben selbiger bewirkt.

2. Vorrichtung nach Anspruch 1, **dadurch gekennzeichnet, dass** die Behälterzuführeinrichtung (50) wenigstens zwei unmittelbar benachbarte Tragelemente (16) gleichzeitig mit Behältern beschickt.

3. Vorrichtung nach Anspruch 1 oder 2, **dadurch gekennzeichnet, dass** die Tragelementhälften (20) Führungsglieder (24) aufweisen, die in vorrichtungsseitige Kulissen (57) eingreifen und die Öffnungsbewegung der Tragelementhälften (20) steuern.

4. Vorrichtung nach Anspruch 3, **dadurch gekennzeichnet, dass** die Kulissen (57) Schrägabschnitte aufweisen, welche die Vertikalbewegung der Tragelementhälften (20) in eine Lateralbewegung transformieren.

5. Vorrichtung nach einem der vorhergehenden Ansprüche, **dadurch gekennzeichnet, dass** die Behälterzuführeinrichtung (50) eine vertikal verfahrbare Plattform mit Halteelementen (54) für Behälter aufweist

6. Vorrichtung nach Anspruch 4 und 5, **dadurch gekennzeichnet, dass** der Anheber (55) mit der Plattform bewegungsgekoppelt, jedoch relativ beweglich zur Plattform angeordnet ist.

7. Vorrichtung nach einem der vorhergehenden Ansprüche, **dadurch gekennzeichnet, dass** die Behälterzuführeinrichtung (50) als Behälterentnahmeeinrichtung dient.

8. Verfahren zum Zuführen von Behältern in eine Vorrichtung (10) zum Befüllen von Behältern, insbesondere von Flaschen (37) und Bechern, mit Nahrungs- und Genussmitteln, insbesondere mit dünnflüssigen bis pastösen Molkerei- und Fettprodukten, Säften, Wässern od. dgl,
- mit einem Obertrum (OT), einem Untertrum (UT) und Ober- und Untertrum (OT, UT) verbindenden Seitentrümern (ST),
- mit einer Vielzahl von Tragelementen (16), die endlos durch die Vorrichtung (10) vorbei an Arbeitsstationen (11) entlang von Ober- Seiten- und Untertrum (OT, ST, UT) geführt sind,
- wobei die Tragelemente (16) quer zur Förderrichtung (X/Y) in Reihen (2) angeordnete Aufnahmen (17) für Behälter aufweisen die in Förderrichtung (X/Y) in Bahnen angeordnet sind,
- wobei die Tragelemente (16) entlang einer Reihe (2) von Aufnahmen (17) in etwa hälftig geteilt sind,
- paarweise einander zugeordnete Teilaussparungen benachbarter Tragelementhälften (20) gemeinsam eine Behälteraufnahme (17) bilden und
- die Tragelementhälften (20) derart in der Vorrichtung (10) gelagert sind, dass Sie eine die Behälteraufnahmen (17) weitende Öffnungsbewegung ausführen können und
- mit einer Behälterzuführeinrichtung (50), **gekennzeichnet durch** folgende Verfahrensschritte:
a) Beschicken von auf einer Plattform angeordneten Halteelementen (54) mit Behältern,
b) Verfahren der Plattform an den Ort der Vorrichtung (10), an welchem die Behälter in die Tragelemente (16) eingesetzt werden,
c) Anheben der Tragelementhälften (20) aus ihrer Auflageebene (AE) zur Ausführung der Öffnungsbewegung,
d) Heben der Behälter zumindest in die Auflageebene (AE) der Tragelemente (16),
e) Absenken der Tragelementhälften (20) in die Auflageebene (AE) zur Ausführung einer Schließbewegung und sicheren Halterung der Behälter in den Behälteraufnahmen (17).

9. Verfahren nach Anspruch 8, **dadurch gekennzeichnet, dass** für Verfahrensschritt c) ein Heben der Plattform erfolgt, welches einen Anheber (55) in Anlage an die Tragelementhälften (20) bringt, der durch eine zur Plattform relative Vertikalbewegung die die Tragelementhälften (20) in Offenstellung verbringt.

10. Verfahren nach einen der Ansprüche 8 oder 9, **dadurch gekennzeichnet, dass** für Verfahrensschritt e) der Anheber (55) abgesenkt wird.

## Claims

1. Device (10) for filling containers, in particular bottles (37) and beakers, with food and drink products, in particular with low-viscosity to pasty dairy and fat products, juices, waters or the like,
- having an upper run (OT), a lower run (UT), and having side runs (ST) connecting the upper run and the lower run (OT, UT),
- having a plurality of support elements (16), which are guided continuously through the device (10) past work stations (11) along the upper, side and lower run (OT, ST, UT),
- wherein the support elements (16) have receivers for containers, which receivers are arranged in rows transversely to the feed direction (X/Y) and are arranged in the feed direction in tracks (B),
- wherein the support elements (16) are divided approximately in half along a row (2) of receivers (17),
- part-apertures of adjacent support element halves (20), which part-apertures are associated with one another in pairs, together form a container receiver (17), and
- the support element halves (20) are so mounted in the device (10) that they are able to perform an opening movement that widens the container receivers (17), and
- having a container feed device (50), **characterised in that** the container feed device (50) feeds the containers to the support elements (17) from beneath, wherein the container feed device (50) lifts the containers for insertion into the container receivers (17) and the lifting operation induces the opening movement of the support element halves (20), and the container feed device (50) comprises a lifting device (55) the vertical movement of which acting on the support element halves (20) effects the opening movement of the support element halves (20) by lifting thereof.

2. Device according to claim 1, **characterised in that** the container feed device (50) simultaneously loads at least two immediately adjacent support elements (16) with containers.

3. Device according to claim 1 or 2, **characterised in that** the support element halves (20) have guide members (24) which engage in connecting members (57) on the device and control the opening movement of the support element halves (20).

4. Device according to claim 3, **characterised in that** the connecting members (57) have sloping portions which convert the vertical movement of the support element halves (20) into a lateral movement.

5. Device according to any one of the preceding claims, **characterised in that** the container feed device (50) has a vertically displaceable platform with holding elements (54) for containers.

6. Device according to claim 4 and 5, **characterised in that** the lifting device (55) is arranged in such a manner that it is coupled for movement with the platform but is movable relative to the platform.

7. Device according to any one of the preceding claims, **characterised in that** the container feed device (50) serves as a container removal device.

8. Method for feeding containers to a device (10) for filling containers, in particular bottles (37) and beakers, with food and drink products, in particular with low-viscosity to pasty dairy and fat products, juices, waters or the like,
- having an upper run (OT), a lower run (UT), and side runs (ST) connecting the upper run and the lower run (OT, UT),
- having a plurality of support elements (16), which are guided continuously through the device (10) past work stations (11) along the upper, side and lower run (OT, ST, UT),
- wherein the support elements (16) have receivers (17) for containers, which receivers (17) are arranged in rows (2) transversely to the feed direction (X/Y) and are arranged in the feed direction (X/Y) in tracks,
- wherein the support elements (16) are divided approximately in half along a row (2) of receivers (17),
- part-apertures of adjacent support element halves (20), which part-apertures are associated with one another in pairs, together form a container receiver (17), and
- the support element halves (20) are so mounted in the device (10) that they are able to perform an opening movement that widens the container receivers (17), and
- having a container feed device (50), **characterised by** the following method steps:
a) loading holding elements (54) arranged on a platform with containers,
b) moving the platform to the location of the device (10) at which the containers are inserted into the support elements (16),
c) lifting the support element halves (20) from their rest plane (AE) to perform the opening movement,
d) lifting the containers at least into the rest plane (AE) of the support elements (16),
e) lowering the support element halves (20) into the rest plane (AE) in order to perform a closing movement and hold the containers securely in the container receivers (17).

9. Method according to claim 8, **characterised in that**, for method step c), a lifting of the platform is carried out which brings a lifting device (55) into contact with the support element halves (20), which lifting device (55) brings the support element halves (20) into the open position by a vertical movement relative to the platform.

10. Method according to either claim 8 or claim 9, **characterised in that** the lifting device (55) is lowered for method step e).

## Revendications

1. Dispositif (10) pour remplir des récipients, en particulier des bouteilles (37) et des pots, avec des produits alimentaires et des produits d'agrément, en particulier avec des produits laitiers et gras, liquides à pâteux, des jus, des eaux ou similaires,
- avec un brin supérieur (OT), un brin inférieur (UT) et avec des brins latéraux (ST) reliant le brin supérieur et le brin inférieur (OT, UT),
- avec une multitude d'éléments de support (16) qui sont guidés, sans fin, à travers le dispositif (10) en passant par des postes de travail (11) le long des brins supérieur, latéraux, inférieur (OT, ST, UT),
- les éléments de support (16) présentant des logements, disposés en rangs transversalement au sens de transport (X/Y), pour les récipients qui sont disposés dans des chemins (B) dans le sens de transport,
- les éléments de support (16) étant divisés à peu près en moitié le long d'un rang (2) de logements (17),
- des moitiés d'élément de support (20) contiguës aux encoches partielles associées les unes aux autres par paires formant en commun un logement pour des récipients (17), et,
- les moitiés d'élément de support (20) étant disposées de telle sorte dans le dispositif (10) qu'elles peuvent réaliser un mouvement d'ouverture agrandissant les logements pour des récipients (17), et,
- avec un dispositif d'amenée de récipients (50),
**caractérisé en ce que** le dispositif d'amenée de récipients (50) amène les récipients d'en dessous aux éléments de support (17), le dispositif d'amenée de récipients (50) soulevant les récipients pour mise en place dans les logements pour récipients (17) et l'opération de levage induisant le mouvement d'ouverture des moitiés d'élément de support (20) et le dispositif d'amenée de récipients (50) comprenant un élévateur (55) dont le mouvement vertical agissant sur les moitiés d'élément de support (20) occasionnant le mouvement d'ouverture des moitiés d'élément de support (20) par élévation en association.

2. Dispositif selon la revendication 1, **caractérisé en ce que** le dispositif d'amenée de récipients (50) charge au moins deux éléments de support (16) directement contigus en même temps avec les récipients.

3. Dispositif selon la revendication 1 ou 2, **caractérisé en ce que** les moitiés d'éléments de support (20) présentent des organes de guidage (24) qui sont en prise dans des coulisses (57) côté dispositif et pilotent le mouvement d'ouverture des moitiés d'élément de support (20).

4. Dispositif selon la revendication 3, **caractérisé en ce que** les coulisses (57) présentent des sections obliques lesquelles transforment le mouvement vertical des moitiés d'élément de support (20) en un mouvement latéral.

5. Dispositif selon l'une des précédentes revendications, **caractérisé en ce que** le dispositif d'amenée de récipients (50) présente une plateforme mobile verticalement avec des éléments de maintien (54) pour les récipients.

6. Dispositif selon les revendications 4 et 5, **caractérisé en ce que** l'élévateur (55) est disposé couplé en mouvement avec la plateforme, cependant relativement mobile par rapport à la plateforme.

7. Dispositif selon l'une des précédentes revendications, **caractérisé en ce que** le dispositif d'amenée de récipients (50) sert de dispositif de prélèvement de récipients.

8. Procédé pour amener des récipients dans un dispositif (10) pour remplir des récipients, en particulier des bouteilles (37) et des pots, avec des produits alimentaires et des produits d'agrément, en particulier avec des produits laitiers et gras, liquides à pâteux, des jus, des eaux ou similaires,
- avec un brin supérieur (OT), un brin inférieur (UT) et des brins latéraux (ST) reliant le brin supérieur et le brin inférieur (OT, UT),
- avec une multitude d'éléments de support (16) qui sont guidés, sans fin, à travers le dispositif (10) en passant par des postes de travail (11) le long des brins supérieur, latéraux, inférieur (OT, ST, UT),
- les éléments de support (16) présentant des logements (17), disposés en rangs (2) transversalement au sens de transport (X/Y), pour les récipients qui sont disposés dans des chemins dans le sens de transport (X/Y),
- les éléments de support (16) étant divisés à peu près en moitié le long d'un rang (2) de logements (17),
- des moitiés d'élément de support (20) contiguës aux encoches partielles associées les unes aux autres par paires formant en commun un logement (17) pour des récipients, et,
- les moitiés d'élément de support (20) étant disposées de telle sorte dans le dispositif (10) qu'elles peuvent réaliser un mouvement d'ouverture agrandissant les logements (17) pour des récipients, et,
- avec un dispositif d'amenée de récipients (50),
caractérisé de par les étapes de procédé suivantes :
a) chargement d'éléments de maintien (54) disposés sur une plateforme, avec des récipients,
b) déplacement de la plateforme au lieu du dispositif (10) au niveau duquel les récipients sont mis en place dans les éléments de support (16),
c) soulèvement des moitiés d'élément de support (20) de leur plan d'appui (AE) pour réalisation du mouvement d'ouverture,
d) élévation des récipients au moins au plan d'appui (AE) des éléments de support (16),
e) abaissement des moitiés d'élément de support (20) au plan d'appui (AE) pour réalisation d'un mouvement de fermeture et de maintien sûr des récipients dans les logements pour des récipients (17).

9. Procédé selon la revendication 8, **caractérisé en ce que** pour l'étape c) du procédé, une élévation de la plateforme s'effectue laquelle amène un élévateur (55) dans l'installation au niveau des moitiés d'élément de support (20), qui place par un mouvement vertical relatif par rapport à la plateforme les moitiés d'élément de support (20) en position ouverte.

10. Procédé selon l'une des revendications 8 ou 9, **caractérisé en ce que** pour l'étape e) du procédé, l'élévateur (55) est abaissé.
